# EUROPEAN PATENT APPLICATION

(11) **EP 4 181 500 A1**
(43) Date of publication of application: **17.05.2023**
(21) Application number: 21837198.7
(22) Date of filing: 23.04.2021
(51) Int. Cl.: H04N 5/232, B61L 23/00, G03B 15/00, G08G 1/16

(54) **IMAGING DEVICE**

(30) Priority: 07.07.2020 JP 2020117266
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: MASHIMA, Yoshiki, Kawasaki-shi, Kanagawa 212-0013 (JP); KOBAYASHI, Hiroyuki, Kawasaki-shi, Kanagawa 212-0013 (JP); FUTAGAMI, Takuya, Kawasaki-shi, Kanagawa 212-0013 (JP); TAKAHASHI, Yusuke, Kawasaki-shi, Kanagawa 212-0013 (JP); OODAKE, Tatsuya, Kawasaki-shi, Kanagawa 212-0013 (JP); KATO, Noriyasu, Kawasaki-shi, Kanagawa 212-0013 (JP); HATTORI, Yohei, Kawasaki-shi, Kanagawa 212-0013 (JP)
(74) Representative: AWA Sweden AB
(86) International application number: PCT/JP2021/016438
(87) International publication number: WO 2022/009506

(57) **Abstract**

An imaging apparatus according to the present embodiment includes an imager, a vehicle information acquirer, and an imaging parameter updater. The imager is an imager that is provided in a vehicle and images an imaging target based on an imaging parameter relating to an imaging condition. The vehicle information acquirer acquires travel environment information on the vehicle during travel. The imaging parameter updater updates the imaging parameter based on an image captured by the imager and the travel environment information acquired by the vehicle information acquirer.

## Description

### [Technical Field]

Embodiments according to the present invention relate to an imaging apparatus.

### [Background Art]

A camera is installed on the front side of a vehicle for monitoring purposes. There are obstacle detection systems that detect an obstacle that may collide with the vehicle from an image acquired by this camera and notify to the driver. Obstacle detection systems are important also toward automated driving on railroads from the viewpoint of securing travel safety. Obstacle detection systems are required to maintain high obstacle detection accuracy throughout all travel sections.

However, camera images captured in scenes where the lighting intensity changes significantly, such as inside a tunnel or at a platform where overexposure and underexposure are likely to occur, may have markedly reduced quality (e.g., in terms of contrast). It is difficult to detect obstacles by applying an image recognition technique to such images of reduced quality.

### [Citation List]

### [Patent Literature]

[Patent Literature 1] Japanese Patent Laid-Open No.2018-037061
[Patent Literature 2] Japanese Patent Laid-Open No.2018-002007
[Patent Literature 3] Japanese Patent Laid-Open No.2009-027651
[Patent Literature 4] Japanese Patent Laid-Open No.2019-221115
[Patent Literature 5] Japanese Patent Laid-Open No.2018-181254

### [Summary of Invention]

### [Technical Problem]

The present invention aims to provide an imaging apparatus that can mitigate a decrease in quality of captured images due to environmental changes.

### [Solution to Problem]

An imaging apparatus according to the present embodiment includes an imager, a vehicle information acquirer, and an imaging parameter updater. The imager is an imager that is provided in a vehicle and images an imaging target based on an imaging parameter relating to an imaging condition. The vehicle information acquirer acquires travel environment information on the vehicle during travel. The imaging parameter updater updates the imaging parameter based on an image captured by the imager and the travel environment information acquired by the vehicle information acquirer.

### [Brief Description of Drawings]

[Figure 1] Figure 1 is a view schematically showing the configuration of a monitoring system including an imaging apparatus in a first embodiment.
[Figure 2] Figure 2 is a diagram schematically showing the functional configurations of apparatuses included in the monitoring system in the first embodiment.
[Figure 3] Figure 3 is an operation flowchart of the monitoring system in the first embodiment.
[Figure 4A] Figure 4A is a view showing one example of adjustment regions and criterial values of an image feature quantity obtained by referring to an imaging parameter dictionary.
[Figure 4B] Figure 4B is a view showing one example of adjustment regions and criterial values of an image feature quantity obtained by referring to an imaging parameter dictionary.
[Figure 5A] Figure 5A is a view showing one example of selection of the adjustment region in a railroad vehicle traveling near a tunnel.
[Figure 5B] Figure 5B is a view showing one example of selection of the adjustment region in a railroad vehicle traveling near a tunnel.
[Figure 6A] Figure 6A is a view illustrating, as one example, a case where obstacle detection is performed during travel near an entrance of a tunnel and an exit of the tunnel.
[Figure 6B] Figure 6B is a view illustrating, as one example, a case where obstacle detection is performed during travel near an entrance of a tunnel and an exit of the tunnel.
[Figure 7] Figure 7 is a diagram schematically showing the functional configurations of apparatuses included in a monitoring system in a second embodiment.

### [Description of Embodiments]

Embodiments according to the present invention will be described below with reference to the drawings. These embodiments do not limit the present invention. The drawings are schematic or conceptual, and the proportions of parts etc. do not necessarily match the actual ones. An element in the specification and the drawings that is the same as one described earlier in relation to a drawing already referred to will be denoted by the same reference sign and detailed description thereof will be omitted as appropriate.

### (First Embodiment)

When driving a railroad vehicle, a driver is required to quickly find a factor that can interfere with travel. For example, upon finding an obstacle, such as a flying object or an animal, that can pose a problem near the track in the advancing direction of the vehicle, the driver promptly brings the vehicle to an emergency stop. To mechanically perform such prompt detection of obstacles, obstacle detection is sometimes performed using, for example, imaging equipment such as a camera. The first embodiment shows one example of detecting, with higher accuracy, an interfering obstacle near a track on the front side of a railroad vehicle during travel of the vehicle.

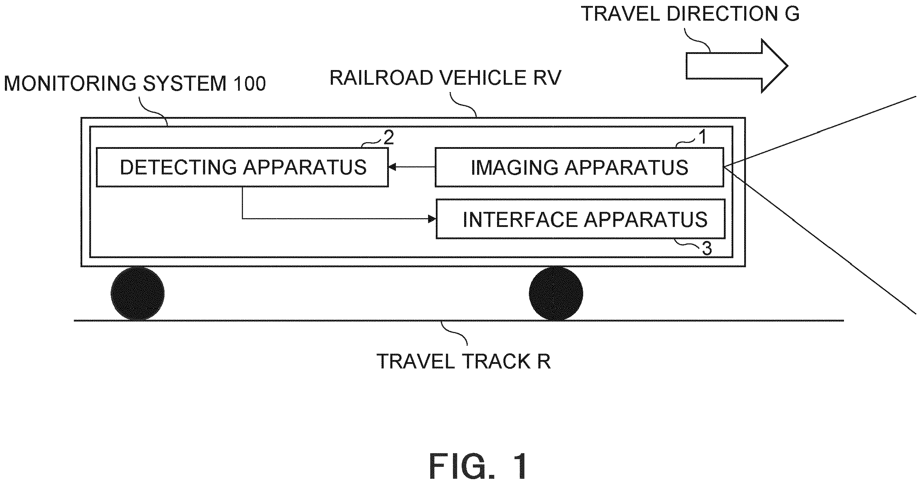

First, the configuration of the first embodiment will be described. FIG. 1 is a view schematically showing the configuration of a monitoring system 100 including an imaging apparatus 1 in the first embodiment. The monitoring system 100 is installed in a railroad vehicle RV that travels along a direction G on a travel track R formed by a pair of rails. The monitoring system 100 includes the imaging apparatus 1, a detecting apparatus 2, and an interface apparatus 3. The imaging apparatus 1 is installed, for example, near a window of a driver's seat and can image sceneries in the travel direction G of the railroad vehicle RV (on the front side of the railroad vehicle).

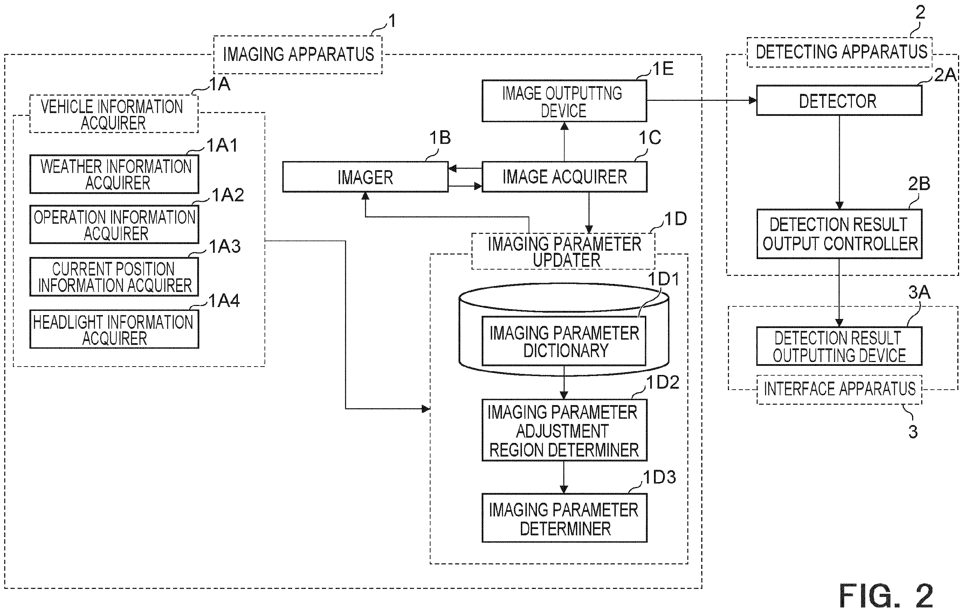

FIG. 2 is a diagram schematically showing the functional configurations of the apparatuses included in the monitoring system 100 in the first embodiment. The imaging apparatus 1 includes a vehicle information acquirer 1A, an imager 1B, an image acquirer 1C, an imaging parameter updater 1D, and an image outputting device 1E. The detecting apparatus 2 includes a detector 2A and a detection result output controller 2B. The interface apparatus 3 includes a detection result outputting device 3A.

The vehicle information acquirer 1A belonging to the imaging apparatus 1 functions to acquire information on the surroundings of the vehicle, and includes a weather information acquirer 1A1, an operation information acquirer 1A2, a current position information acquirer 1A3, and a headlight information acquirer 1A4. The weather information acquirer 1A1 functions to acquire information about the weather, such as a fine weather, a cloudy weather, rain, snow, hail, wind direction, wind speed, and the position of the sun, when the vehicle is traveling or stationary. The operation information acquirer 1A2 functions to acquire vehicle information such as a current speed that can be obtained during operation of the vehicle, an advancing direction during travel, the shape of a track to be traveled, and facility information. The current position information acquirer 1A3 functions to acquire information on the current position of the vehicle. The headlight information acquirer 1A4 functions to acquire information such as brightness and a radiation angle of a headlight installed on the front side of the vehicle.

Specifically, the vehicle information acquirer 1A acquires travel environment information on the railroad vehicle RV (vehicle) during travel. The travel environment information includes, for example, at least one of the aforementioned pieces of information, namely, the state of the weather around the railroad vehicle RV, the speed, the advancing direction, the information on the track to be traveled, the information on the facility to be traveled, the position, and the state of the headlight. For example, the vehicle information acquirer 1A may acquire the travel environment information from various sensors provided inside the railroad vehicle RV, or may acquire the travel environment information by communicating with the outside of the railroad vehicle RV. The vehicle information acquirer 1A sends the vehicle environment information to the imaging parameter updater 1D.

The imager 1B belonging to the imaging apparatus 1 refers to imaging equipment that captures images based on imaging parameters set by the imaging parameter determiner 1D3.

Specifically, the imager 1B is provided in the railroad vehicle RV and images an imaging target based on imaging parameters relating to imaging conditions. The captured images are acquired by the image acquirer 1C. The imaging conditions include, for example, at least one of the shutter speed, gain, aperture value, high dynamic range (HDR) parameter, and angle of view of the imager 1B. The imaging target includes, for example, at least one of the travel route (travel track R) of the railroad vehicle RV, the surroundings of this travel route, and signs provided in this surroundings. The imaging target may be changed according to the monitoring target or the monitoring purpose.

The image acquirer 1C belonging to the imaging apparatus 1 acquires an image captured by the imager 1B. Specifically, the image acquirer 1C acquires an image captured by the imager 1B based on the imaging parameters. The image acquirer 1C sends the captured image to the imaging parameter updater 1D. The imager 1B sends the captured image to the image acquirer 1C and the image outputting device 1E and receives imaging parameters from the imaging parameter updater 1D.

The imaging parameter updater 1D belonging to the imaging apparatus 1 includes an imaging parameter dictionary 1D1, an imaging parameter adjustment region determiner 1D2, and the imaging parameter determiner 1D3. The imaging parameter dictionary 1D1 is a reference dictionary for acquiring an adjustment region and a criterial value of an image feature quantity etc. that serve as criteria in adjusting the imaging parameters. In this case, values input into the reference dictionary are referred to based on the aforementioned information obtained by the vehicle information acquirer 1A. The imaging parameter adjustment region determiner 1D2 sets the aforementioned adjustment region obtained by referring to the imaging parameter dictionary 1D1. The imaging parameter determiner 1D3 sets the value of each imaging parameter based on the set adjustment region and the image obtained by the image acquirer 1C such that overexposure, underexposure, and the like do not occur. The imaging parameters shown here are the parameters (values) of imaging conditions, such as the shutter speed, gain, aperture value, HDR parameter, and angle of view. In this case, to determine the imaging parameters, the aforementioned information obtained by the vehicle information acquirer 1A may be referred to.

Specifically, the imaging parameter updater 1D updates the imaging parameters based on the captured image acquired by the image acquirer 1C (the captured image captured by the imager 1B) and the travel environment information acquired by the vehicle information acquirer 1A. The imager 1B images the imaging target based on the updated imaging parameters. The image acquirer 1C acquires a captured image of the imaging target captured by the imager 1B based on the updated imaging parameters. Thus, the imaging apparatus 1 can image the imaging target so as to mitigate a decrease in quality (e.g., overexposure or underexposure) of the captured image due to environmental changes. The imaging parameter updater 1D receives the travel environment information and the captured image from the vehicle information acquirer 1A and the image acquirer 1C, respectively, and sends the imaging parameters to the imager 1B.

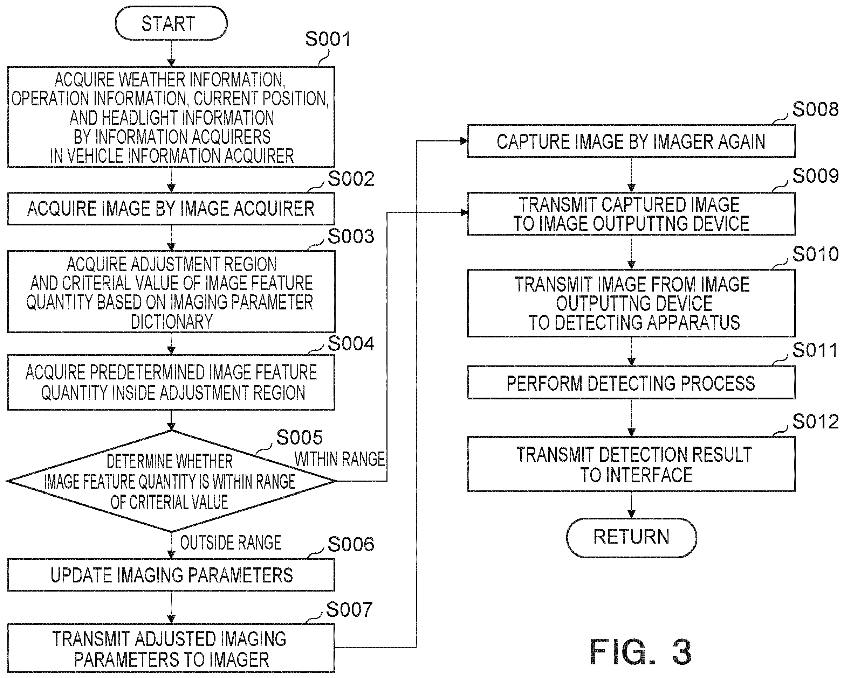

Details of updating of the imaging parameters using the adjustment region will be described later with reference to FIG. 3 to FIG. 5.

The image outputting device 1E belonging to the imaging apparatus 1 receives the aforementioned captured image acquired by the image acquirer 1C and outputs the image to the detector 2A belonging to the detecting apparatus 2 to be described later.

The detecting apparatus 2 includes the detector 2A and the detection result output controller 2B. The detector 2A belonging to the detecting apparatus 2 acquires a captured image from the aforementioned image outputting device 1E and performs obstacle detection.

More specifically, the detector 2A (detecting apparatus 2) detects an abnormality of the imaging target based on an image. The abnormality of the imaging target is not limited to an obstacle on the travel track R but may also be, for example, an animal approaching the periphery of the travel track R or an abnormality of a sign.

The detection result output controller 2B belonging to the detecting apparatus 2 outputs a result of obstacle detection to the detection result outputting device 3A belonging to the interface apparatus 3 to be described later.

The interface apparatus 3 includes the detection result outputting device 3A. The detection result outputting device 3A belonging to the interface apparatus 3 acquires a result of obstacle detection from the aforementioned detection result output controller 2B and notifies the result through each interface apparatus. Receivers of the notification are the driver, passengers, a railroad command center, common people in the surroundings of the travel route, animals, etc. The notification method is not particularly specified as long as it is of a form understandable to receivers of the notification. Examples of understandable forms include, in the case where receivers of the notification are present in the vehicle, notification through description on a display or a message board inside the vehicle or a speaker provided in the vehicle, and in the case where receivers of the notification are outside the vehicle, notification through a horn of the vehicle or a voice from an external speaker or the like. Thus, the detection result outputting device 3A as a display device displays an image or a detection result of the detecting apparatus 2.

FIG. 3 shows an operation flowchart of the monitoring system 100 in the first embodiment. FIG. 3 shows an operation flowchart in which, for example, the imaging parameters are updated once. For example, the operation shown in FIG. 3 is repeatedly executed during travel of the railroad vehicle RV.

First, in step S001, the vehicle information acquirer 1A acquires the weather information, operation information, current position, and headlight information to determine the imaging parameters. The weather information refers to, for example, a fine weather, a cloudy weather, rain, snow, hail, wind direction, wind speed, and the position of the sun when the vehicle is traveling or stationary. The operation information refers to information including, for example, the shape of the track in the advancing direction, branching of the track, and facility information such as a tunnel, a platform of a station, a land bridge, and a railroad crossing. The current position information refers to the current position of the railroad vehicle RV obtained using, for example, a global navigation satellite system (GNSS) or a position detecting device called a tachogenerator (TG). The current position is expressed in, for example, latitude and longitude or kilometer distance. Here, the kilometer distance indicates, for example, a travel position of the vehicle expressed in units of 100 m from the starting point, such as a starting station, and the latitude and longitude indicate measured values that can be acquired from a position detecting device. The headlight information refers to the brightness, radiation angle, etc. of the headlight installed on the front side of the railroad vehicle RV.

Next, in step S002, the image acquirer 1C acquires an image captured by the imager 1B. The image captured in step S002 is an image before the imaging parameters are adjusted. For example, when the time of the image to be subjected to a detecting process is "t", an image captured at the point of time "t-1" is used. In this case, an image that has been captured at time "t-1" with the imaging parameters adjusted may be used.

Next, in step S003, the imaging parameter updater 1D acquires the adjustment region and the criterial value of the image feature quantity from the imaging parameter dictionary 1D1 based on the acquired information. Hereinafter, the criterial value of the image feature quantity may also be referred to as a criterial feature value.

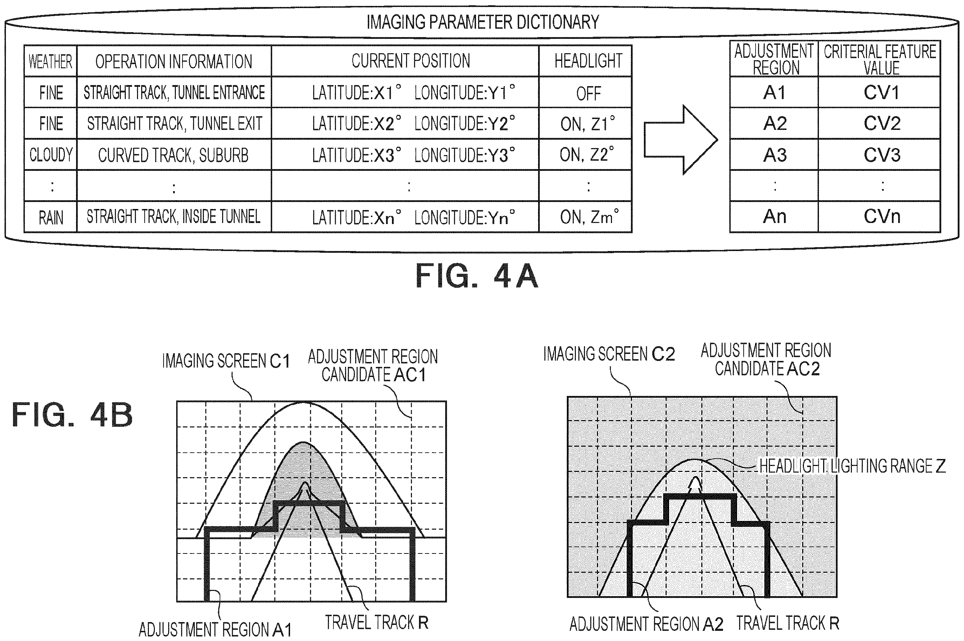

FIG. 4 is a view showing one example of adjustment regions and criterial values of the image feature quantity obtained by referring to the imaging parameter dictionary. FIG. 4A is relationship information that is stored in the imaging parameter dictionary 1D1 and shows correspondence relationships between the travel environment information on one hand and the adjustment region and the criterial feature value on the other. A plurality of correspondence relationships (e.g., "n" relationships in the example shown in FIG. 4A) is stored in the imaging parameter dictionary 1D1. The current position is expressed by a latitude Xn° (n = 1, 2, ...) and a longitude Yn° (n=1, 2, ...). The angle of the headlight is expressed by Zm° (m = 1, 2, ...). Each pattern of the travel environment information is connected to an adjustment region An (n = 1, 2, ...) and a criterial feature value CVn (n = 1, 2, ...). FIG. 4B shows captured images and adjustment regions in captured images.

A candidate of the adjustment region is, for example, each arbitrary cell in an imaging screen that is divided into parts of an arbitrary size and shape, such as quadrangles. By selecting a plurality of cells, it is possible to select an adjustment region that can be enlarged or reduced, or to select an adjustment region that is not limited to adjacent cells. FIG. 4B shows adjustment regions A1, A2. In some cases, the adjustment region is changed according to the travel environment information.

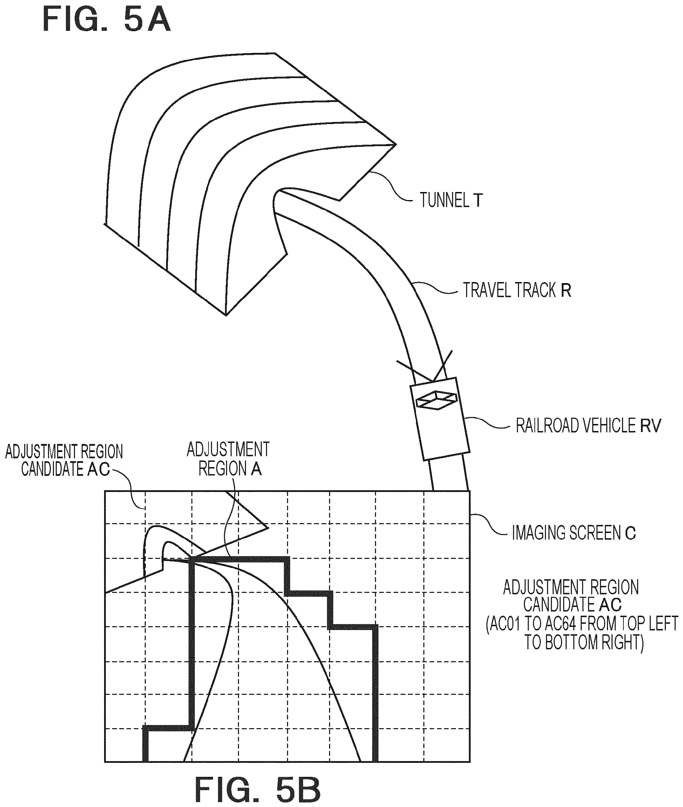

FIG. 5 is a view showing one example of selection of the adjustment region A in the railroad vehicle RV traveling near a tunnel T. FIG. 5A is a view of the railroad vehicle RV as seen from above. FIG. 5B is a captured image captured from the railroad vehicle RV.

In FIG. 5B, an aggregation of cells near the travel track R is acquired as the adjustment region A from adjustment region candidates AC that are 64 cells in lines and rows into which an imaging screen C is divided. Thus, even when the track is curved, the adjustment region A is set according to the shape of the track. The criterial value of the image feature quantity may be used based on, for example, an edge quantity inside the adjustment region of the acquired image. The criterial value is, for example, an edge quantity in the adjustment region that has been deemed to be clear enough by the driver or a management clerk. In this case, a suitable criterial value of the edge quantity inside the adjustment region is obtained according to the weather, operation information, current position, and headlight. The imaging parameters are dynamically determined in later steps based on this criterial value.

Next, in step S004, the imaging parameter updater 1D acquires a predetermined image feature inside the adjustment region from the image acquired in step S002 by using image processing or signal processing. The image feature refers to an image feature that is set in the imaging parameter dictionary, and is, for example, the edge quantity. The image feature quantity is not limited to the edge quantity but may also be other feature quantity.

Next, in step S005, the imaging parameter updater 1D determines whether updating the imaging parameters is necessary. For example, when the acquired image feature quantity is within the range of the criterial value of the image feature quantity obtained by referring to the imaging parameter dictionary, it is determined that updating the imaging parameters is not necessary. When the imaging parameter updater 1D determines that updating is not necessary, the imaging parameter updater 1D moves to step S009 and continues the processing. On the other hand, when the acquired image feature quantity is within the range of the criterial feature value, the imaging parameter updater 1D determines to update the imaging parameters and moves to step S006.

Next, in step S006, the imaging parameter updater 1D updates the imaging parameters. By updating the imaging parameters according to the travel scene, a captured image suitable for detection with overexposure, underexposure, etc. taken into account is acquired. Here, the imaging parameters refer to the parameters (values) of imaging conditions such as the shutter speed, gain, aperture value, HDR parameter, and angle of view. As the method of changing the imaging parameters, for example, the imaging parameters may be determined from a dictionary collecting certain rules based on knowledge, such as raising the imaging parameter of the gain by one level. This dictionary may include correspondence relationships between the travel environment information and the imaging parameters. Alternatively, an objective function may be set, and the imaging parameters may be determined so as to minimize this objective function.

Specifically, the imaging parameter updater 1D updates the imaging parameters based on the adjustment region set from inside the captured image. More specifically, the imaging parameter updater 1D updates the imaging parameters so as to maintain or improve the image quality in the adjustment region.

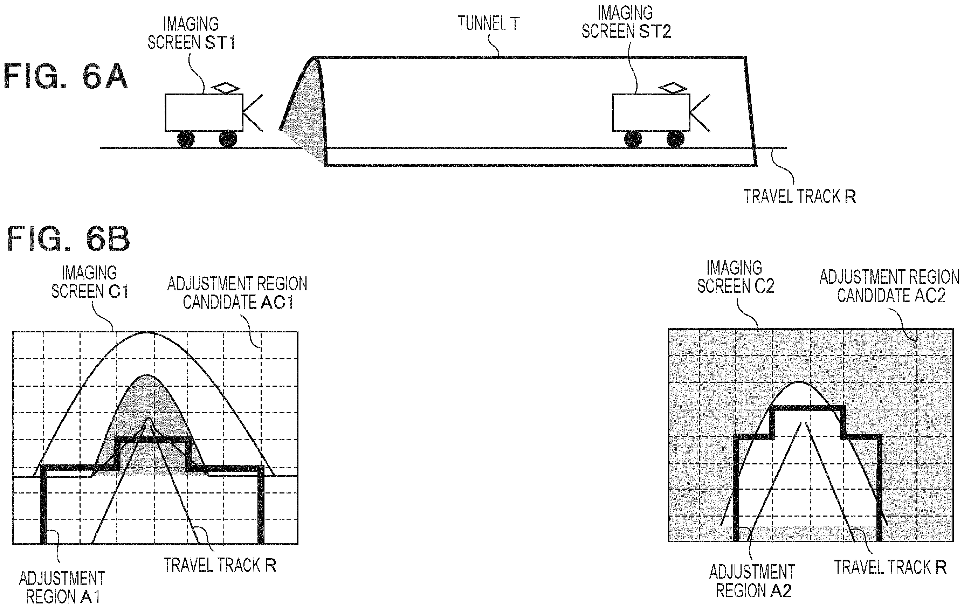

Details of updating of the imaging parameters relating to steps S003 to S006 will be described later with reference to FIG. 6.

Next, in step S007, the imaging parameter updater 1D transmits the adjusted imaging parameters to the imager 1B.

Next, in step S008, the imager 1B performs imaging again by applying the received imaging parameters that have been adjusted. The image acquirer 1C acquires the image captured again by the imager 1B.

Next, in step S009, the image acquirer 1C transmits the image that has been acquired by applying the adjusted imaging parameters to the image outputting device 1E. Or when it is determined in step S005 that updating the imaging parameters is not necessary, the image acquirer 1C transmits an image that has been acquired before adjustment of the imaging parameters (an image captured with unadjusted imaging parameters) to the image outputting device 1E.

Next, in step S010, the image outputting device 1E transmits the received image to the detecting apparatus 2.

Next, in step S011, the detecting apparatus 2 performs a detecting process of detecting a target from the received image. Here, the detection result may be displayed on the image. Or the detection result may be written in another file, without being indicated on the image. As for the detection method, for example, a publicly known example such as Japanese Patent Laid-Open No. 2019-221115 or Japanese Patent Laid-Open No. 2018-181254 may be referred to.

Finally, in step S012, the detection result outputting device 3A belonging to the interface apparatus 3 notifies the detection result obtained in aforementioned step S011. Here, in the case where the notification method is displaying or drawing a detection output image through a device capable of outputting images, such as a display, it may interfere with the driver's steering of the vehicle unless the frequency of updating the display or drawing is appropriately set. For example, in the case where the driver is notified through a display as the detection result image is drawn on an image obtained from the image outputting device 1E, changes in brightness of the image and flickering of the screen that result from rapid changes in the travel environment may interfere with the driver's steering of the vehicle. In this case, the frequency of updating the display or drawing of the detection result image to be drawn on the device of the interface apparatus 3 may be set to be equivalent to or lower than the frequency of detection by the detecting apparatus 2.

Next, one example of dynamic updating of the imaging parameters in a specific scene of implementation relating to steps S003 to S006 of FIG. 3 will be described with reference to FIG. 6.

In step S003 of FIG. 3, the dictionary (see FIG. 4A) is used that outputs the adjustment region of the imaging parameters and the criterial value of the image feature quantity as each environmental condition is input into it in setting the imaging parameters. This dictionary may be acquired in advance from the vehicle to be equipped with the monitoring system 100. Or this dictionary may be collected in advance by simulation on software.

One example of the specific configuration of the dictionary is as shown in FIG. 4A. Specifically, the imaging parameter updater 1D uses, as keys, the weather information, operation information, current position, and headlight information acquired from the vehicle information acquirer 1A of the imaging apparatus 1, and acquires, as values, the adjustment region and the criterial value of the image feature quantity. One example of adjustment regions is as shown in FIG. 4A.

FIG. 6 is a view illustrating, as one example, a case where obstacle detection is performed during travel near the entrance of the tunnel T and the exit of the tunnel T. FIG. 6A shows one example of the positional relationship of the railroad vehicle RV with the tunnel T. FIG. 6B is almost the same as FIG. 4B.

First, an imaging situation ST1 immediately before passing through the entrance of the tunnel T will be described as an example. When the detecting apparatus 2 performs obstacle detection immediately before passing through the entrance of the tunnel T, the region where obstacles are detected is on the track inside the tunnel, which makes it necessary to dynamically determine the adjustment region and the imaging parameters. It is assumed that the pieces of information acquired from the vehicle information acquirer 1A indicate as follows: the weather information indicates a fine weather; the operation information indicates that the shape of the next travel track is straight; the facility information indicates the entrance of a tunnel; the current position has a latitude X1° and a longitude Y1°; and the headlights are off. In this case, the imaging parameter updater 1D acquires the adjustment region A1 displayed on the imaging screen C1 of FIG. 6B by referring to the adjustment region and the criterial value of the image feature quantity from the imaging parameter dictionary 1D1 shown in FIG. 4A.

Next, the imaging parameter updater 1D determines the imaging parameters based on the adjustment region A1 and the image information acquired by the image acquirer 1C. First, the imaging parameter updater 1D acquires the image feature quantity through image processing or signal processing, with a focus on the inside of the adjustment region A1. Here, the image feature quantity refers to, for example, the edge quantity. When this image feature quantity is within the range of the criterial value of the image feature quantity obtained from the imaging parameter dictionary 1D1, the imaging parameter updater 1D determines that updating the imaging parameters is not necessary. On the other hand, when the image feature quantity acquired from the adjustment region A1 is outside the range of the criterial value of the image feature quantity, the imaging parameter updater 1D determines that updating the imaging parameters is necessary. When updating the imaging parameters is necessary, for example, the imaging parameter updater 1D determines the imaging parameters from a dictionary collecting certain rules based on knowledge, such as raising the imaging parameter, such as the gain, by one level. Since the adjustment region is on the track inside the tunnel T, for example, the imaging parameter updater 1D acquires the HDR parameter as EV values at two levels by setting the shutter speed to 1/30 s, the gain to a higher value, and the aperture value (F value) to a lower value, and sets the angle of view to a wider angle such that the inside of the adjustment region is displayed at the center of the image. The imaging parameter updater 1D applies these determined imaging parameters to the imager 1B, and the image acquirer 1C acquires an image again. Thereafter, the image outputting device 1E outputs the image to the detecting apparatus 2, and the detecting apparatus 2 performs a detecting process using the image more suitable for obstacle detection.

Thus, based on the travel environment information acquired by the vehicle information acquirer 1A, the imaging parameter updater 1D sets (determines) the predetermined region (adjustment region) including at least the imaging target from inside the captured image. More specifically, the imaging parameter updater 1D sets the adjustment region from inside the captured image captured by the imager 1B by applying the travel environment information acquired by the vehicle information acquirer 1A to the first relationship that connects the travel environment information obtained beforehand and the adjustment region inside the captured image obtained beforehand to each other. The "travel environment information obtained beforehand" includes, for example, past travel environment information on the railroad vehicle RV that has been acquired in the past by the vehicle information acquirer 1A or travel environment information that has been obtained by simulation. The "captured image obtained beforehand" includes, for example, a past captured image that has been acquired in the past by the image acquirer 1C (captured in the past by the imager 1B) or a captured image that has been obtained by simulation. The simulation refers to, for example, simulating travel of the vehicle on software. This simulation is sometimes used, as it is costly to actually acquire travel environment information and a captured image on site. The "travel environment information acquired by the vehicle information acquirer 1A" is the travel environment information at the current time (during travel). The current travel environment information may be used in future as past travel environment information to update the imaging parameters. The "captured image captured by the imager 1B" is the captured image at the current time (during travel). The current captured image may be used in future as a past captured image to update the imaging parameters. The first relationship constitutes a portion of the imaging parameter dictionary 1D1. For example, the adjustment region of the imaging parameter dictionary 1D1 may be selected by the driver or a management clerk from inside the captured image obtained beforehand, or may be selected by specifying an imaging target from the captured image obtained beforehand through image recognition.

The imaging parameter updater 1D acquires the criterial feature value of the image feature quantity in the adjustment region based on the travel environment information acquired by the vehicle information acquirer 1A. The criterial feature value is an image feature quantity in the adjustment region inside the captured image obtained beforehand. More specifically, the imaging parameter updater 1D acquires the criterial feature value by applying the travel environment information acquired by the vehicle information acquirer 1A to the second relationship that connects the travel environment information obtained beforehand and the criterial feature value to each other. The second relationship constitutes a portion of the imaging parameter dictionary 1D1.

In the imaging parameter dictionary 1D1 including the first relationship and the second relationship of the example shown in FIG. 4A, the past travel environment information on the railroad vehicle RV acquired in the past by the vehicle information acquirer 1A on one hand and the criterial feature value and the adjustment region inside the past captured image captured in the past by the imager 1B on the other are connected to each other.

Further, the imaging parameter updater 1D updates the imaging parameters each time the adjustment region is set. More specifically, each time the adjustment region is updated, the imaging parameter updater 1D determines whether to update the imaging parameters. Moreover, the imaging parameter updater 1D updates the imaging parameters based on a comparison between the criterial feature value and the image feature quantity in the adjustment region set from inside the captured image. More specifically, when the image feature quantity in the adjustment region set from inside the captured image is outside the predetermined range including the criterial feature value, the imaging parameter updater 1D updates the imaging parameters. When the image feature quantity in the adjustment region set from inside the captured image is inside the predetermined range, the imaging parameter updater 1D does not update the imaging parameters. Thus, when the image feature quantity is within the predetermined range, the captured image is useful enough for obstacle detection and therefore the process of updating the imaging parameters can be omitted.

Next, an imaging situation ST2 immediately before passing through the exit of the tunnel T will be described as an example. Unlike in the imaging situation ST1 immediately before passing through the entrance of the tunnel T, the region where obstacles are detected is on the track outside the tunnel T. Thus, it is highly likely that the adjustment region and the imaging parameters are dynamically determined as in the imaging situation ST1. It is assumed that the pieces of information acquired from the vehicle information acquirer 1A indicates as follows: the weather information indicates a fine weather; the operation information indicates that the shape of the next travel track is straight; the facility information indicates the exit of a tunnel; the current position has a latitude X2° and a longitude Y2°; the headlights are off; and the angle of the headlight is Z1°. In this case, the imaging parameter updater 1D acquires the adjustment region A2 displayed on the imaging screen C2 of FIG. 6B by referring to the adjustment region and the criterial value of the image feature quantity from the imaging parameter dictionary 1D1 shown in FIG. 4A.

Next, the imaging parameter updater 1D determines the imaging parameters based on the adjustment region A2 and the image information acquired by the image acquirer 1C. As in the imaging situation ST1, the imaging parameter updater 1D obtains the image feature quantity by image processing or signal processing from the image from which the image feature quantity inside the adjustment region has been acquired. The imaging parameter updater 1D determines whether updating the imaging parameters is necessary by comparing the obtained image feature quantity with the criterial value of the image feature quantity obtained by referring to the imaging parameter dictionary 1D1. If the imaging parameter updater 1D determines that updating is necessary, since the adjustment region is on the track outside the tunnel T, for example, the imaging parameter updater 1D acquires the HDR parameter as EV values at two levels by setting the shutter speed to 1/30 s, the gain to a lower value, and the aperture value (F value) to a higher value, and sets the angle of view to a wider angle such that the inside of the adjustment region is displayed at the center of the image. Thereafter, the detecting apparatus 2 performs obstacle detection as in the imaging situation ST1 and detects obstacles with higher accuracy.

Specifically, the imaging parameter updater 1D re-sets (updates) the adjustment region inside the captured image for each predetermined section on the travel route of the railroad vehicle RV. The predetermined section is, for example, a section within a range of 500 m around the railroad vehicle RV in the imaging situations ST1, ST2 shown in FIG. 6. However, without being limited thereto, the predetermined section may be additionally provided between the imaging situations ST1, ST2 of FIG. 6, and a plurality of predetermined sections is provided also on the travel track R not shown in FIG. 6. Thus, the imaging parameters are repeatedly updated during travel of the railroad vehicle RV.

As has been described above, according to the first embodiment, the imager 1B images the imaging target based on the imaging parameters relating to the imaging conditions. The imaging parameter updater 1D updates the imaging parameters based on the captured image captured by the imager 1B and the travel environment information acquired by the vehicle information acquirer 1A. The imager 1B images the imaging target based on the updated imaging parameters. Thus, the imaging parameters can be changed according to an environmental change, such as a change in the lighting intensity near a tunnel. As a result, it is possible to mitigate a decrease in quality of captured images due to environmental changes and improve the image quality. Therefore, for example, images useful for detecting, with higher accuracy, interfering obstacles near the track on the front side of the vehicle can be acquired. Environmental changes that can be dealt with may vary depending on the type of travel environment information. The types of travel environment information are not limited to those described above, and the number of pieces of travel environment information used also as a dictionary may be restricted as necessary. Environmental changes are not limited to those relating to a tunnel, and may also include, for example, a change in lighting intensity due to west sun.

The imaging parameter updater 1D updates the imaging parameters based on the adjustment region determined from inside the captured image.

If an imaging parameter for clearly imaging the entire image is set, the imaging target that is a monitoring target may fail to be clearly imaged.

In the first embodiment, by contrast, the imaging parameters can be adjusted with a focus on the adjustment region inside the captured image. Thus, the image quality of the imaging target can be improved to help the detecting apparatus 2 recognize the imaging target from inside the captured image. As a result, the detection accuracy of the detecting apparatus 2 can be increased.

The adjustment region can be dynamically changed according to the situation during travel. The cycle of changing the adjustment region may be arbitrary. For example, when the frame rate of the camera (imager 1B) acquired by the imaging apparatus 1 is 30 fps, the imaging parameter updater 1D may update the adjustment region each time one frame is acquired. On the other hand, the imaging parameter updater 1D may update the adjustment region once every second regardless of the frame rate of the camera. Thus, the imaging parameter updater 1D may re-set the adjustment region inside the captured image once every predetermined time. The predetermined time is not limited to the aforementioned frame rate and one second. Further, the imaging parameter updater 1D may update the adjustment region by combining updating for each predetermined section and updating once every predetermined time.

The imager 1B may image an imaging target in at least one of the advancing direction (travel direction G) of the railroad vehicle RV and the opposite direction from the advancing direction. In this case, for example, the imaging apparatus 1 may further include an imager 1B that is provided on the rear side of the railroad vehicle RV and images an imaging target on the rear side of the vehicle. The imaging target on the front side and that on the rear side may be different from each other, and the method of updating the imaging parameters may be the same for both sides. The imager 1B may image the imaging target on the rear side without imaging the imaging target on the front side.

Determination based on the image feature quantity in steps S004, S005 shown in FIG. 3 may be omitted. Thus, the imaging parameter updater 1D updates the imaging parameters each time the adjustment region is re-set. In this case, it is not necessary to connect the criterial feature value in the imaging parameter dictionary 1D1. This can reduce the time and effort for creating the imaging parameter dictionary 1D1.

### (Second Embodiment)

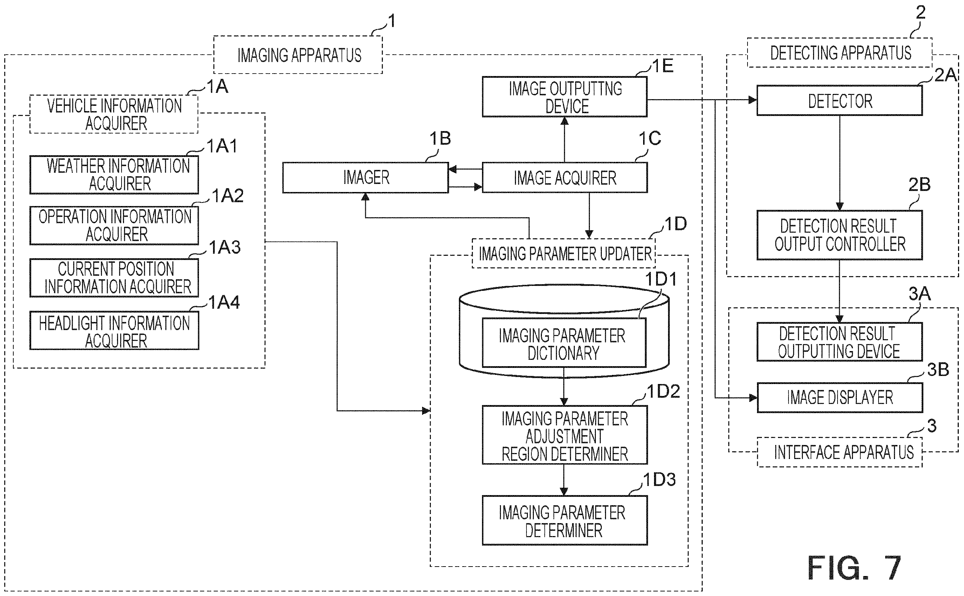

FIG. 7 shows a diagram schematically showing the functional configurations of apparatuses included in a monitoring system 100 in a second embodiment. The second embodiment differs from the first embodiment in that detection by the detecting apparatus 2 is not always performed.

The interface apparatus 3 further includes an image displayer 3B.

The image displayer 3B as a display device displays images. More specifically, the image displayer 3B displays images output by the image outputting device 1E without involving the detecting apparatus 2. This is because, in some cases, more clearly imaging the imaging target rather than obstacle detection is required. Therefore, for example, the imaging apparatus 1 can set the imaging parameters so as to help a person recognize the imaging target from inside the captured image.

The image outputting device 1E outputs the captured image captured by the imager 1B based on the updated imaging parameters to at least one of the detector 2A and the image displayer 3B.

While the detecting apparatus 2 and the detection result outputting device 3A are shown in FIG. 7, these may be omitted.

The other components of the imaging apparatus 1 and the monitoring system 100 in the second embodiment are the same as the corresponding components of the imaging apparatus 1 and the monitoring system 100 in the first embodiment, and therefore detailed description thereof will be omitted.

The imaging apparatus 1 according to the second embodiment can produce effects similar to those of the first embodiment.

At least part of the imaging apparatus 1 according to the present embodiment may be formed by hardware or may be formed by software. When forming part of the imaging apparatus 1 by software, a program that realizes at least some of the functions of the imaging apparatus 1 may be stored in a recording medium, such as a flexible disc or a CD-ROM, read into a computer, and executed. The recording medium is not limited to a removable one, such as a magnetic disc or an optical disc, and may also be a fixed recording medium, such as a hard disc device or a memory. The program that realizes at least some of the functions of the imaging apparatus 1 may be distributed through a communication line (including wireless communication), such as the Internet. Further, the program may be distributed through a wired or wireless network, such as the Internet, or by being stored in a recording medium, in a state of having been encrypted, modulated, or compressed.

While some embodiments of the present invention have been described, these embodiments have been presented as examples and are not intended to limit the scope of the invention. These embodiments can be implemented in various other forms, and various omissions, substitutions, and changes can be made thereto within the scope of the gist of the invention. These embodiments and their modifications are included in the scope and the gist of the invention, as well as in the invention described in the claims and a scope equivalent to the claims.

## Claims

1. An imaging apparatus comprising:
an imager provided in a vehicle and configured to image an imaging target based on an imaging parameter relating to an imaging condition;
a vehicle information acquirer configured to acquire travel environment information on the vehicle during travel; and
an imaging parameter updater configured to update the imaging parameter based on a captured image captured by the imager and the travel environment information acquired by the vehicle information acquirer.

2. The imaging apparatus according to claim 1, wherein the imaging parameter updater is configured to:
set a predetermined region including at least the imaging target from inside the captured image based on the travel environment information acquired by the vehicle information acquirer; and
update the imaging parameter based on the predetermined region set from inside the captured image.

3. The imaging apparatus according to claim 2, wherein the imaging parameter updater is configured to set the predetermined region from inside the captured image captured by the imager by applying the travel environment information acquired by the vehicle information acquirer to a first relationship that connects the travel environment information obtained beforehand and the predetermined region inside the captured image obtained beforehand to each other.

4. The imaging apparatus according to claim 2 or claim 3, wherein the imaging parameter updater is configured to:
acquire a criterial value of an image feature quantity in the predetermined region based on the travel environment information acquired by the vehicle information acquirer; and
update the imaging parameter based on a comparison between the criterial value and an image feature quantity in the predetermined region set from inside the captured image.

5. The imaging apparatus according to claim 4, wherein the criterial value is an image feature quantity in the predetermined region inside the captured image obtained beforehand.

6. The imaging apparatus according to claim 4 or claim 5, wherein the imaging parameter updater is configured to acquire the criterial value by applying the travel environment information acquired by the vehicle information acquirer to a second relationship that connects the travel environment information obtained beforehand and the criterial value to each other.

7. The imaging apparatus according to any one of claim 4 to claim 6, wherein the imaging parameter updater is configured:
to update the imaging parameter when an image feature quantity in the predetermined region set from inside the captured image is outside a predetermined range including the criterial value; and
not to update the imaging parameter when the image feature quantity in the predetermined region set from inside the captured image is within the predetermined range.

8. The imaging apparatus according to any one of claim 2 to claim 7, wherein the imaging parameter updater is configured to re-set the predetermined region inside the captured image for each predetermined section on a travel route of the vehicle.

9. The imaging apparatus according to any one of claim 2 to claim 8, wherein the imaging parameter updater is configured to re-set the predetermined region inside the captured image once every predetermined time.

10. The imaging apparatus according to any one of claim 2 to claim 9, wherein the imaging parameter updater is configured to update the imaging parameter each time the predetermined region is set.
